# EUROPEAN PATENT APPLICATION

(11) **EP 4 836 286 A1**
(43) Date of publication of application: **04.11.2026**
(21) Application number: 24912252.4
(22) Date of filing: 04.12.2024
(51) Int. Cl.: H02P 21/22, H02M 7/48, H02P 27/06

(54) **CONTROL DEVICE FOR ROTARY ELECTRIC MACHINE, PROGRAM, AND CONTROL METHOD FOR ROTARY ELECTRIC MACHINE**

(30) Priority: 26.12.2023 JP 2023219448
(71) Applicant: DENSO CORPORATION, Kariya-city, Aichi 448-8661 (JP)
(72) Inventor: OISHI, Ryohei, Kariya-city, Aichi 448-8661 (JP)
(74) Representative: TBK
(86) International application number: PCT/JP2024/042877
(87) International publication number: WO 2025/142362

(57) **Abstract**

In H drive control, space vectors include a first H vector (VaH) and a second H vector (VbH) each having an H-level voltage, a first L vector (VaL) and a second L vector (VbL) each having an L-level voltage, and an M vector (VM) having an M-level voltage. A control apparatus (70) sets a switching pattern for each predetermined period to include at least three of the first H vector, the second H vector, the M vector, the first L vector, and the second L vector.

## Description

### [Cross Reference to Related Application]

The present application is based on Japanese Application No. 2023-219448 filed on December 26, 2023, the contents of which are incorporated herein by reference.

### [Technical Field]

The present disclosure relates to a control apparatus of a rotary electric machine, a program thereof and a control method for the control electric machine.

### [Background Art]

Conventionally, a system that performs driving control of a rotary electric machine using two inverters is known. According to this system, a first inverter is electrically connected to first ends of armature windings of a plurality of phases included in the rotary electric machine and a second inverter is electrically connected to second ends of the armature windings. The control apparatus included in the system performs a switching control of the first and second inverters, thereby performing a driving control of a rotary electric machine. For example, such a technique is included in PTL 1.

### [Citation List]

### [Patent Literature]

[PTL1] Japanese Patent No.7361222

### [Summary of the Invention]

The control apparatus performs H-drive control in which respective switches included in the first and second inverters are driven by PWM. Specifically, the control apparatus performs H-drive control in which a voltage vector applied to the armature winding includes a zero voltage vector and an active voltage vector. During a period of the zero voltage vector, no current flows from the DC power source to the first and second inverters, and therefore the capacitor connected to the first inverter is charged by the DC power source. On the other hand, during a period of the active voltage vector, the capacitor is discharged. As the capacitor is repeatedly charged and discharged, a ripple component is included in the current flowing through the capacitor.

Here, depending on the operating point of the rotary electric machine, the period of the zero voltage vector may become longer. In this case, current ripple flowing through the capacitor increases, thereby increasing the heat generated by the capacitor.

A main object of the present disclosure is to provide a control apparatus for a rotary electric machine, a program and a control method thereof capable of reducing ripple current flowing through a capacitor.

The present disclosure relates to a control apparatus for a rotary electric machine, applied to a system including:
a rotary electric machine having multi-phase armature windings;
   a first inverter including, for each phase, a first upper-arm switch and a first lower-arm switch connected in series, series connections of the first upper-arm switch and the first lower-arm switch being connected in parallel to a DC power supply;
a second inverter including, for each phase, a second upper-arm switch and a second lower-arm switch connected in series;
a positive-side bus line electrically connecting, for each phase, a high-potential-side terminal of the first upper-arm switch and a high-potential-side terminal of the second upper-arm switch;
a negative-side bus line electrically connecting, for each phase, a low-potential-side terminal of the first lower-arm switch and a low-potential-side terminal of the second lower-arm switch; and
a capacitor connected in parallel to the series connection of the first upper-arm switch and the first lower-arm switch,

for each phase, a low-potential-side terminal of the first upper-arm switch and a high-potential-side terminal of the first lower-arm switch being electrically connected to a first end of the armature winding;
for each phase, a low-potential-side terminal of the second upper-arm switch and a high-potential-side terminal of the second lower-arm switch being electrically connected to a second end of the armature winding;
   the control apparatus including:
   a setting unit that sets, in H drive control for PWM-driving the first upper-arm switch, the first lower-arm switch, the second upper-arm switch, and the second lower-arm switch, a switching pattern for each
predetermined period of the first upper-arm switch, the first lower-arm switch, the second upper-arm switch, and the second lower-arm switch; and
   a switch control unit that controls on/off states of the first upper-arm switch, the first lower-arm switch, the second upper-arm switch, and the second lower-arm switch based on the switching pattern.

In the H drive control, space vectors include:
a zero voltage vector;
a first H vector extending from an origin on a first axis line, the first H vector having an H-level voltage;
a second H vector extending from the origin on a second axis line forming an electrical angle of 60 degrees with respect to the first axis line, the second H vector having an H-level voltage; an M vector extending from the origin to a midpoint between a tip of the first H vector and a tip of the second H vector, the M vector having an M-level voltage;
a first L vector extending from the origin to a midpoint between a tip of the first H vector and the origin, the first L vector having an L-level voltage; and
a second L vector extending from the origin to a midpoint between a tip of the second H vector and the origin, the second L vector having an L-level voltage.

The setting unit includes, in the switching pattern for each predetermined period, at least three of the first H vector, the second H vector, the M vector, the first L vector, and the second L vector.

Accordingly, a period of a zero voltage vector in each predetermined period can be shortened, and current ripple flowing through the capacitor can be reduced.

### [Brief Description of the Drawings]

The above and other objects, features, and advantages of the present disclosure will become more apparent from the following detailed description with reference to the accompanying drawings, the drawings are:
[Fig. 1] is an overall configuration diagram of a control system according to one embodiment;
[Fig. 2] is a functional block diagram of control processing executed by a control apparatus;
[Fig. 3] is a diagram illustrating a control mode of Y-drive control;
[Fig. 4] is a diagram illustrating a control mode of H-drive control;
[Fig. 5] is a diagram illustrating voltage vectors that can be output by a first inverter;
[Fig. 6] is a diagram illustrating voltage vectors that can be output by a second inverter;
[Fig. 7] is a diagram illustrating composite vectors that can be output by the first and second inverters;
[Fig. 8] is a diagram illustrating vectors and the like in a first sector;
[Fig. 9] is a timing chart illustrating an example of a switching pattern setting mode;
[Fig. 10] is a timing chart illustrating an example of a switching pattern setting mode according to a comparative example;
[Fig. 11] is a flowchart of H-drive control process executed by the control apparatus;
[Fig. 12] is a timing chart illustrating an example of a switching pattern setting mode according to another embodiment;
[Fig. 13] is a timing chart illustrating an example of a switching pattern setting mode according to another embodiment;
[Fig. 14] is a timing chart illustrating an example of a switching pattern setting mode according to another embodiment;
[Fig. 15] is a timing chart illustrating an example of a switching pattern setting mode according to another embodiment; and
[Fig. 16] is a timing chart illustrating an example of a switching pattern setting mode according to another embodiment.

### [Description of the Embodiments]

Hereinafter, with reference to the drawings, an embodiment in which a control apparatus of the present disclosure is embodied will be described. The control apparatus of the present embodiment is applied to a control system mounted in an electric vehicle, a hybrid vehicle, or the like.

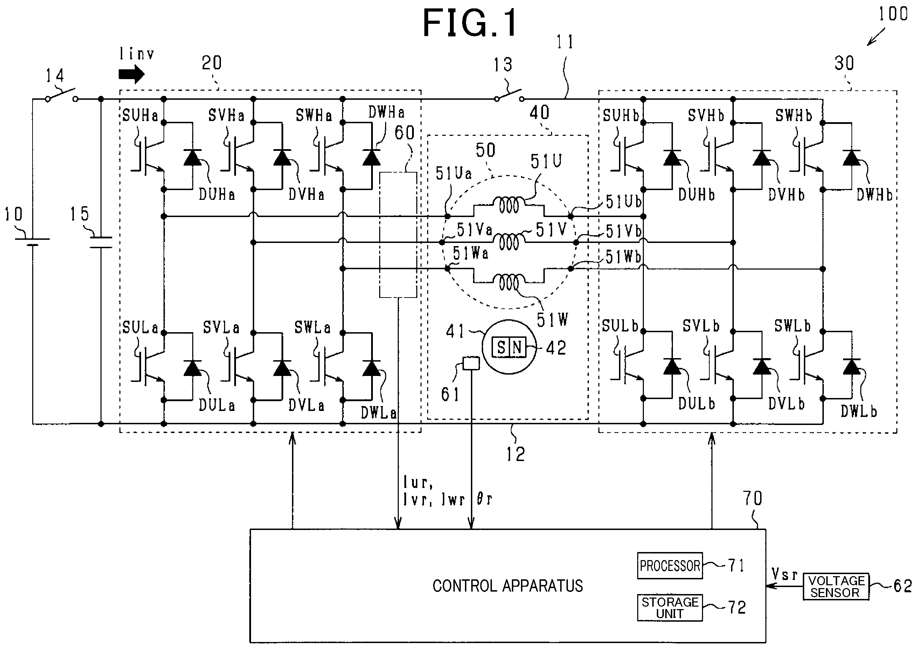

As shown in Fig. 1, a control system 100 includes a battery 10 serving as a DC power source, a first inverter 20, a second inverter 30, and a rotary electric machine 40. The battery 10 may be, for example, a battery pack including a series connection of unit cells. Each unit cell is a single battery cell or a series connection of a plurality of battery cells. Each battery cell is, for example, a secondary battery such as a lithium-ion battery.

The first inverter 20 and the second inverter 30 are power conversion circuits that convert DC power supplied from the battery 10 into three-phase AC power and supply the three-phase AC power to the rotary electric machine 40.

The first inverter 20 includes, for each of U-, V-, and W-phases, a series connection of a first upper-arm switch SUHa, SVHa, SWHa and a first lower-arm switch SULa, SVLa, SWLa. The second inverter 30 includes, for each of the U-, V-, and W-phases, a series connection of a second upper-arm switch SUHb, SVHb, SWHb and a second lower-arm switch SULb, SVLb, SWLb.

According to the present embodiment, each of the switches SUHa-SWLa and SUHb-SWLb is a voltage-controlled semiconductor switching element, and more specifically an IGBT. In this case, a high-potential-side terminal of each of the switches SUHa-SWLa and SUHb-SWLb serves a collector, and a low-potential-side terminal thereof serves as an emitter. A freewheel diode is connected in antiparallel with each of the switches SUHa-SWLa and SUHb-SWLb. More specifically, U-, V-, and W-phase first upper-arm diodes DUHa, DVHa, and DWHa are connected in antiparallel with the U-, V-, and W-phase first upper-arm switches SUHa, SVHa, and SWHa, respectively. U-, V-, and W-phase first lower-arm diodes DULa, DVLa, and DWLa are connected in antiparallel with the U-, V-, and W-phase first lower-arm switches SULa, SVLa, and SWLa, respectively. U-, V-, and W-phase second upper-arm diodes DUHb, DVHb, and DWHb are connected in antiparallel with the U-, V-, and W-phase second upper-arm switches SUHb, SVHb, and SWHb, respectively. U-, V-, and W-phase second lower-arm diodes DULb, DVLb, and DWLb are connected in antiparallel with the U-, V-, and W-phase second lower-arm switches SULb, SVLb, and SWLb, respectively.

The collectors of the U-, V-, and W-phase first upper-arm switches SUHa, SVHa, and SWHa and the collectors of the U-, V-, and W-phase second upper-arm switches SUHb, SVHb, and SWHb are connected via a positive-side bus line 11, which is an electrical path such as a bus bar. The emitters of the U-, V-, and W-phase first lower-arm switches SULa, SVLa, and SWLa and the emitters of the U-, V-, and W-phase second lower-arm switches SULb, SVLb, and SWLb are connected via a negative-side bus line 12, which is an electrical path such as a bus bar. The emitters of the U-, V-, and W-phase second lower-arm switches SULb, SVLb, and SWLb are connected to the negative-side bus line 12.

The control system 100 includes a power supply switch 14. The power supply switch 14 is, for example, a semiconductor switching element or a mechanical relay. The power supply switch 14 connects the positive-side bus line 11 and a positive terminal of the battery 10. When the power supply switch 14 is turned on, the positive terminal of the battery 10 is electrically connected to the collectors of the U-, V-, and W-phase first upper-arm switches SUHa, SVHa, and SWHa. On the other hand, when the power supply switch 14 is turned off, the positive terminal of the battery 10 is electrically disconnected from the collectors of the U-, V-, and W-phase first upper-arm switches SUHa, SVHa, and SWHa.

The control system 100 includes a capacitor 15. The capacitor 15 functions as a smoothing capacitor. The capacitor 15 is connected in parallel with a series connection of the U-, V-, and W-phase first upper-arm switches SUHa-SWHa and the U-, V-, and W-phase first lower-arm switches SULa-SWLa.

The rotary electric machine 40 is an onboard main machine serving as a driving power source for a vehicle. The rotary electric machine 40 includes a rotor 41 and a stator 50. The rotor 41 is configured to be capable of transmitting power to drive wheels of the vehicle. According to the present embodiment, the rotary electric machine 40 is a permanent-magnet-field synchronous machine. The rotor 41 includes a permanent magnet 42 (for example, a neodymium magnet) as a field pole.

The stator 50 includes a U-phase winding 51U, a V-phase winding 51V, and a W-phase winding 51W as armature windings. The phase windings 51U, 51V, and 51W are arranged in a stator core of the stator 50 at electrical intervals of 120 degrees. Each of the phase windings 51U, 51V, and 51W is an open winding.

In each phase, emitters of the first upper-arm switches SUHa, SVHa, and SWHa and collectors of the first lower-arm switches SULa, SVLa, and SWLa are connected to first ends 51Ua, 51Va, and 51Wa of the windings 51U, 51V, and 51W, respectively. Further, in each phase, emitters of the second upper-arm switches SUHb, SVHb, and SWHb and collectors of the second lower-arm switches SULb, SVLb, and SWLb are connected to second ends 51Ub, 51Vb, and 51Wb of the windings 51U, 51V, and 51W, respectively.

The control system 100 includes a changeover switch 13. The changeover switch 13 is provided on the positive-side bus bar 11 (corresponding to a 'target bus bar'). The changeover switch 13 is, for example, a semiconductor switching element or a mechanical relay. When the changeover switch 13 is turned on, the collectors of the upper-arm switches SUHa, SVHa, and SWHa of the respective phases of the first inverter 20 are electrically connected to the collectors of the upper-arm switches SUHb, SVHb, and SWHb of the respective phases of the second inverter 30. On the other hand, when the changeover switch 13 is turned off, the collectors of the upper-arm switches SUHa, SVHa, and SWHa of the respective phases of the first inverter 20 are electrically disconnected from the collectors of the upper-arm switches SUHb, SVHb, and SWHb of the respective phases of the second inverter 30.

The changeover switch 13 may be implemented, for example, as an IGBT. In this case, a freewheeling diode is connected in antiparallel with the changeover switch 13. The collector of the IGBT is connected to the first inverter 20 side, and the emitter of the IGBT is connected to the second inverter 30 side.

Referring back to the description of Fig. 1, the control system 100 includes a current sensor 60, a rotation angle sensor 61, and a voltage sensor 62.

The current sensor 60 detects phase currents flowing through the respective phase windings 51U, 51V, and 51W. According to the present embodiment, the current sensor 60 is provided on the first inverter 20 side of the two ends of each of the phase windings 51U, 51V, and 51W. Hereinafter, the sign of the phase current is defined such that, for each phase, the current flowing from the first ends 51Ua, 51Va, and 51Wa of the windings 51U, 51V, and 51W to the second ends 51Ub, 51Vb, and 51Wb is defined as positive, and the current flowing from the second ends 51Ub, 51Vb, and 51Wb to the first ends 51Ua, 51Va, and 51Wa is defined as negative. The current sensor 60 may alternatively be provided on the second inverter 30 side of the two ends of each of the phase windings 51U, 51V, and 51W.

The rotation angle sensor 61 is, for example, a resolver and detects an electrical angle of the rotor 41. The voltage sensor 62 detects a terminal voltage across the capacitor 15.

Detection values from the respective sensors 60 to 62 are transmitted to a control apparatus 70 included in the control system 100. The control apparatus 70 is an electronic control unit (ECU: Electronic Control Unit) that performs various controls of the control system 100, and includes a processor 71 and a storage unit 72 as hardware. In the control system 100, each in-vehicle device may be controlled by an ECU corresponding to the respective in-vehicle device. However, in Fig. 1, for convenience of illustration, a plurality of ECUs are shown as a single control apparatus 70.

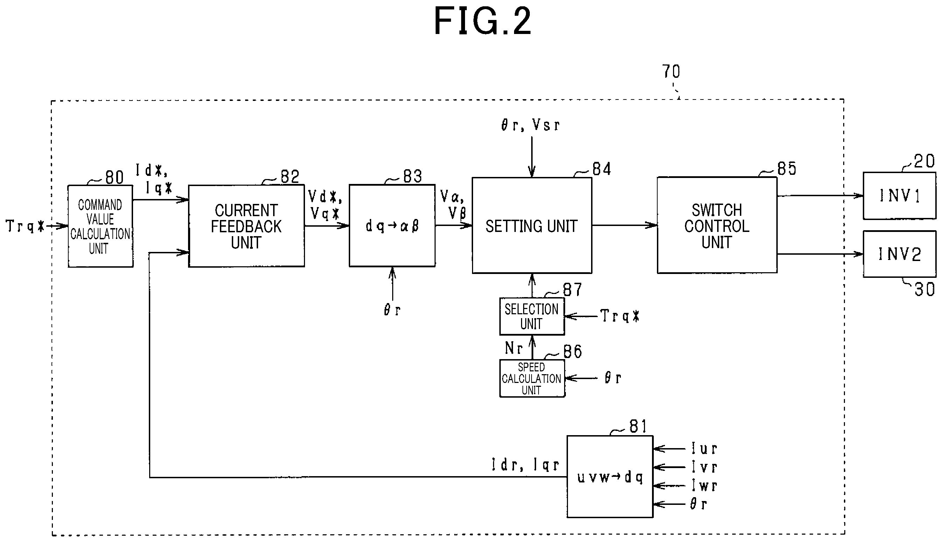

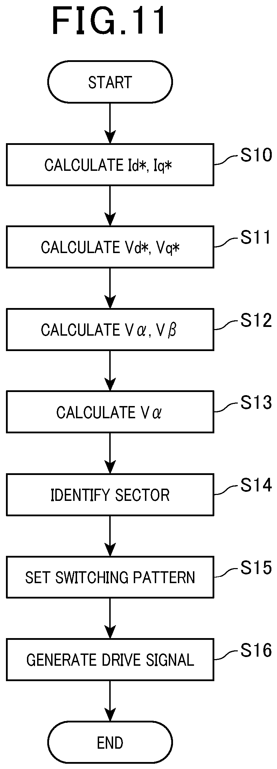

The storage unit 72 includes a memory and a storage as hardware components. The memory is a storage device configured to store data used for processing by the control apparatus 70. For example, the memory provides the processor 71 with a work area temporarily used when the processor 71 performs processing. The memory may include, for example, a ROM or a RAM. The storage is a storage device configured to store various programs and data to be read and executed by the processor 71, serving as a non-transitory computer-readable storage medium. The storage may include, for example, an HDD or a flash memory. The storage stores, for example, program information for executing the processes shown in Figs. 2 and 11, which will be described later.

For example, program information stored in a non-transitory tangible recording medium may be installed in the storage unit 72. The recording medium may be, for example, a USB memory, a CD-ROM, or a DVD. Further, for example, program information transmitted via a communication network, such as by OTA (Over The Air), may be installed in the storage unit 72.

In order to control a control quantity of the rotary electric machine 40 to be a command value, the control apparatus 70 controls on/off states of the changeover switch 13, the switches SUHa to SWLa of the first inverter 20, and the switches SUHb to SWLb of the second inverter 30, in a state in which the power supply switch 14 is turned on. According to the present embodiment, the control quantity is torque.

Fig. 2 shows a block diagram of a control process of the rotary electric machine 40 executed by the control apparatus 70.

A command value calculation unit 80 calculates a d-axis current command value Id* and a q-axis current command value Iq* in a dq coordinate system, which is a two-phase rotating coordinate system, based on a command torque Trq* received from a control apparatus as a higher level apparatus than the control apparatus 70.

A two-phase conversion unit 81 calculates a d-axis current value Idr and a q-axis current value Iqr based on the phase currents Iur, Ivr, and Iwr detected by the current sensor 60 and an electrical angle θr detected by the rotation angle sensor 61.

A current feedback unit 82 calculates a d-axis voltage command value Vd* and a q-axis voltage command value Vq* based on the d-axis and q-axis current command values Id* and Iq* and the d-axis and q-axis current values Idr and Iqr. More specifically, the current feedback unit 82 calculates a d-axis current deviation, which is a difference between the d-axis current command value Id* and the d-axis current value Idr, and calculates the d-axis voltage command value Vd* as a manipulated variable for feedback control to reduce the calculated d-axis current deviation to be zero. The current feedback unit 82 calculates a q-axis current deviation, which is a difference between the q-axis current command value Iq* and the q-axis current value Iqr, and calculates the q-axis voltage command value Vq* as a manipulated variable for feedback control to reduce the calculated q-axis current deviation to be zero. The feedback control is, for example, proportional-integral control.

The fixed coordinate conversion unit 83 converts the d- and q-axis voltage command values Vd* and Vq* in the dq coordinate system into α- and β-axis command voltages Vα and Vβ in a two-phase fixed coordinate system, based on the electrical angle θr.

The setting unit 84 calculates a command voltage vector Vαβ determined by the converted α- and β-axis command voltages Vα and Vβ. The command voltage vector Vαβ is a voltage vector for controlling the torque of the rotary electric machine 40 to be a commanded torque Trq*. The setting unit 84 generates drive signals for the switches SUHa to SWLa and SUHb to SWLb of the first and second inverters 20 and 30, based on the calculated command voltage vector Vαβ. The drive signals include ON commands and OFF commands for the switches.

A switch control unit 85 controls charging and discharging currents flowing from/to the gates of switches SUHa to SWLa and SUHb to SWLb of the first inverter 20 and the second inverter 30, based on the generated drive signals, whereby on and off states of the switches SUHa to SWLa and SUHb to SWLb of the first inverter 20 and the second inverter 30 are controlled in accordance with the drive signals.

A speed calculation unit 86 configured to calculate a rotational speed Nr of a rotor 41 based on an electrical angle θr.

A selection unit 87 determines whether a drive state of the control system 100 should be Y drive control or H drive control. In the present embodiment, the selection unit 87 selects one of the Y drive control and the H drive control based on an operating point of a rotary electric machine 40 determined by a calculated rotational speed Nr and a commanded torque Trq*, and a control map information. The control map information defining a region for the Y drive control and a region for the H drive control in association with the rotational speed Nr and the commanded torque Trq*. The control map information is stored in the storage unit 72.

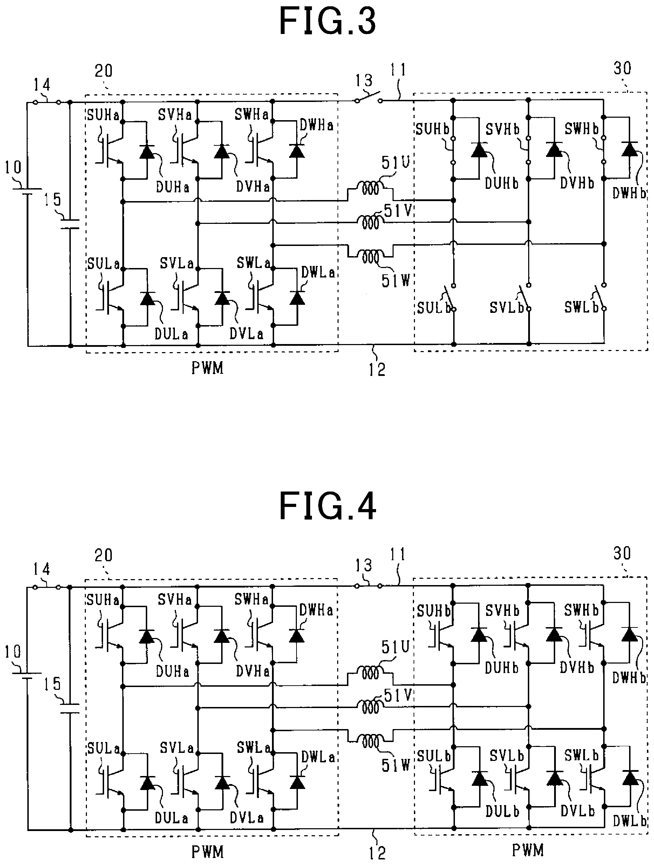

The setting unit 84 performs, when the Y drive control is selected by the selection unit 87, the Y drive control such that, as shown in Fig. 3, the changeover switch 13 is switched to off and each of the switches SUHa to SWLa of the first inverter 20 is PWM-driven. Further, the upper-arm switches SUHb, SVHb, and SWHb of each phase of the second inverter 30 are fixed to on, and the lower-arm switches SULb, SVLb, and SWLb of each phase of the second inverter 30 are fixed to off. As a result, the phase windings 51U, 51V, and 51W are connected in a star configuration via the second inverter 30.

On the other hand, the setting unit 84 performs, when the H drive control is selected by the selection unit 87, the H drive control such that, as shown in Fig. 4, the changeover switch 13 is switched to on, each of the switches SUHa to SWLa of the first inverter 20 is PWM-driven, and each of the switches SUHb to SWLb of the second inverter 30 is PWM-driven.

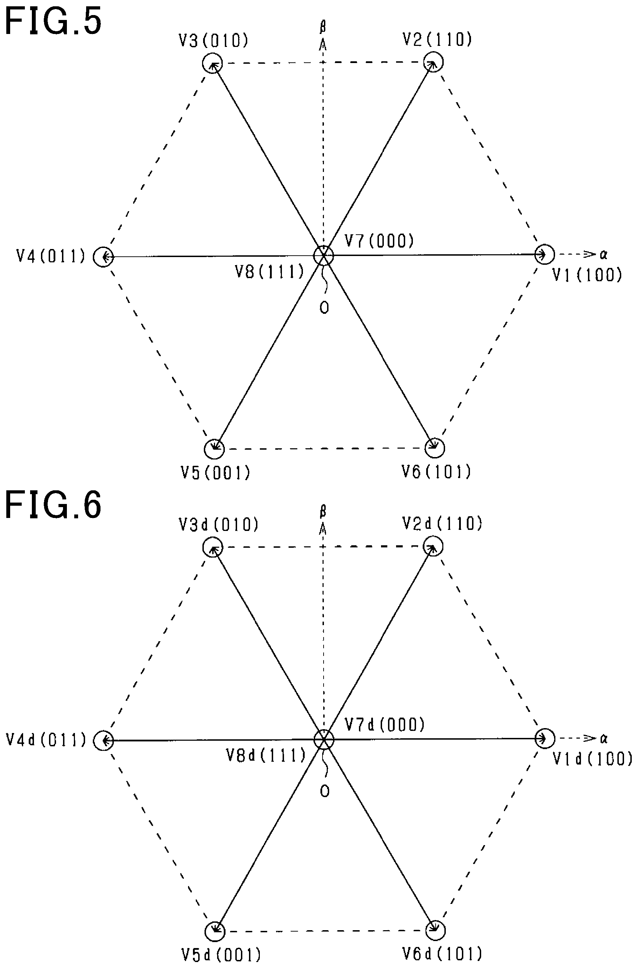

Fig. 5 shows voltage vectors that can be output by the first inverter 20 in a two-phase fixed coordinate system (αβ coordinate system). Fig. 6 shows voltage vectors that can be output by the second inverter 30 in the two-phase fixed coordinate system (αβ coordinate system).

In Fig. 5, voltage vectors that can be output by the first inverter 20 are denoted by V1 to V8. The numerals '1' and '0' shown together with the voltage vectors represent switching states of the first inverter 20. Specifically, '1' indicates that the upper-arm switch is on and the lower-arm switch is off, and '0' indicates that the upper-arm switch is off and the lower-arm switch is on. The numerals are arranged from left to right to represent switching states of the U-, V-, and W-phases. For example, in the case of '1,0,0', the U-phase upper-arm switch and the V- and W-phase lower-arm switches are turned on, while the U-phase lower-arm switch and the V- and W-phase upper-arm switches are turned off.

In Fig. 6, voltage vectors that can be output by the second inverter 30 are denoted by V1d to V8d. The meanings of numerals such as '1' and '0' shown together with the voltage vectors are the same as those in the case of the first inverter 20.

In Figs. 5 and 6, V1 to V6 and V1d to V6d are active voltage vectors. V7, V8, V7d, and V8d are zero voltage vectors, also referred to as reactive voltage vectors.

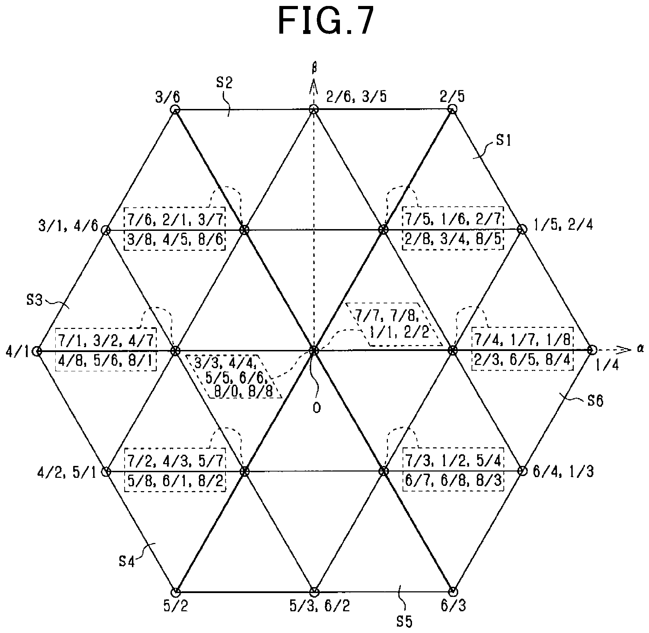

Fig. 7 shows composite vectors of voltage vectors of the first and second inverters 20 and 30, which are realizable as space vectors in the αβ coordinate system in H drive control. A total of 64 composite vectors are available.

For example, '1/4' indicates that the voltage vector of the first inverter 20 is V1 and the voltage vector of the second inverter 30 is V4d. Further, for example, '5/7' indicates that the voltage vector of the first inverter 20 is V5 and the voltage vector of the second inverter 30 is V7d.

The setting unit 84 identifies a sector in which a tip of the calculated command voltage vector Vαβ is located. The sectors are obtained by dividing a vector space in which the command voltage vector Vαβ can exist into six regions with respect to a phase angle of the command voltage vector Vαβ. The phase angle of the command voltage vector Vαβ is an angle formed between the command voltage vector Vαβ and an α-axis (U-phase axis), and specifically corresponds to an electrical angle θr. A sign of the electrical angle θr is defined such that counterclockwise rotation is positive. Fig. 7 shows first to sixth sectors S1 to S6 that divide the vector space into six regions. Each sector is a region between two axis lines forming an electrical angle of 60 degrees. Hereinafter, a case where the identified sector is the first sector S1 will be described as an example.

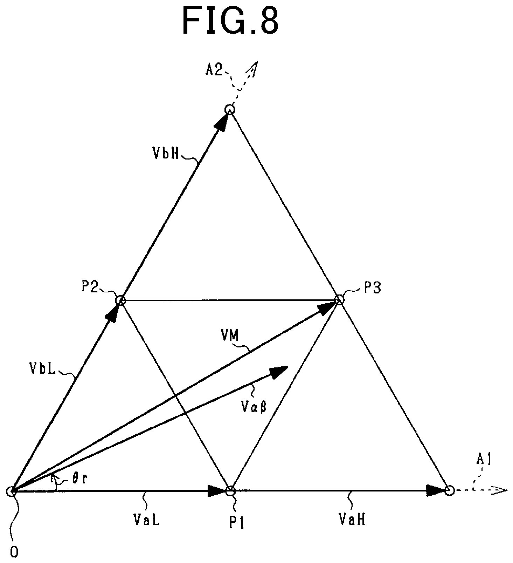

Fig. 8 shows the first sector. A1 is a first axis line extending from an origin O, and A2 is a second axis line extending from the origin O. The second axis line A2 is an axis line obtained by rotating the first axis line A1 by 60 degrees counterclockwise about the origin O.

VaH is a voltage vector extending from the origin O on the first axis line A1, and is a first H-level vector having a voltage level of an H level. VbH is a voltage vector extending from the origin O on the second axis line A2, and is a second H-level vector having a voltage level of an H level.

VaL is a voltage vector extending from the origin O to a first midpoint P1, and is a first L-level vector having a voltage level of an L level. The first midpoint P1 is a point on the first axis line A1 and is a midpoint between a tip of the first H-level vector VaH and the origin O.

VbL is a voltage vector extending from the origin O to a second midpoint P2, and is a second L-level vector having a voltage level of an L level. The second midpoint P2 is a point on the second axis line A2 and is a midpoint between a tip of the second H-level vector VbH and the origin O.

VM is a voltage vector extending from the origin O to a third midpoint P3, and is an M-level vector having a voltage level of an M level. The third midpoint P3 is a midpoint between a tip of the first H-level vector VaH and a tip of the second H-level vector VbH.

Voltage levels of the vectors VaH, VbH, VaL, VbL, and VM indicate magnitudes of the voltage vectors. The voltage levels (H levels) of the first H-level vector VaH and the second H-level vector VbH are higher than a voltage level (M level) of the M-level vector VM. The voltage level (M level) of the M-level vector VM is higher than voltage levels (L levels) of the first L-level vector VaL and the second L-level vector VbL.

Note that the relationship shown in Fig. 8 is similarly applicable to the second to sixth sectors S2 to S6.

The setting unit 84 sets, based on the identified sector, the command voltage vector Vαβ, and the electrical angle θr, a switching pattern that reduces a current ripple flowing through the capacitor 15 by using space vector modulation (SVM). Specifically, the setting unit 84 includes, in a switching pattern for each predetermined period (Tsw/2), a zero voltage vector, the first H-level vector VaH, the second H-level vector VbH, the M-level vector VM, the first L-level vector VaL, and the second L-level vector VbL. The predetermined period corresponds to one half of one switching period Tsw of the switch.

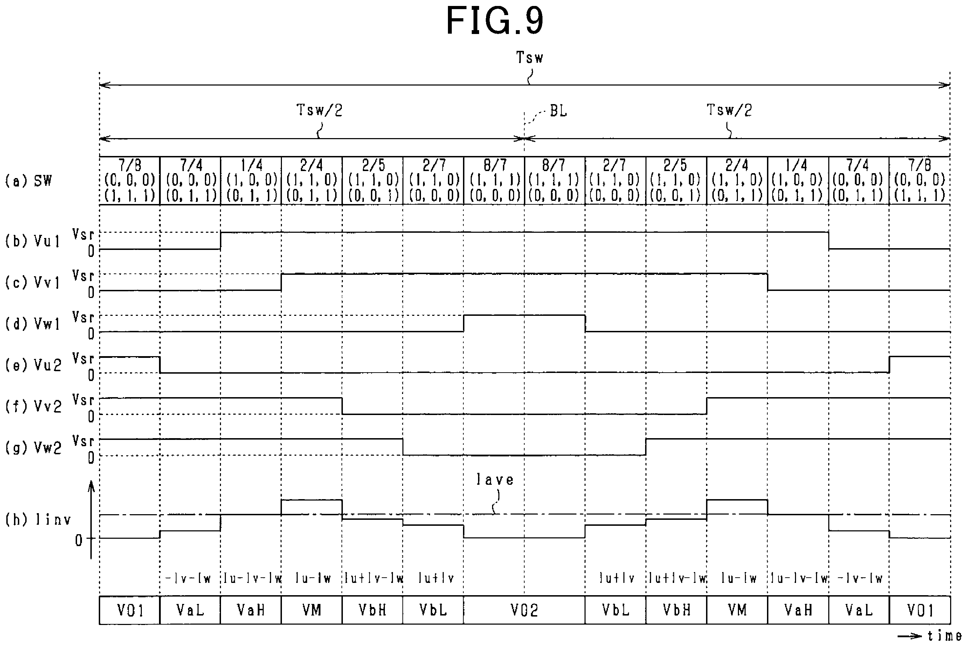

Fig. 9 shows an example of a switching pattern when the first sector is identified. In Fig. 9, a switching pattern (a) shows a transition of composite vectors constituting the switching pattern. Note that switching patterns (b), (c), and (d) show transitions of voltages Vu1, Vv1, and Vw1 output from the first inverter 20 to the U-, V-, and W-phase windings 51U, 51V, and 51W. The switching patterns (e), (f), and (g) show transitions of voltages Vu2, Vv2, and Vw2 output from the second inverter 30 to the U-, V-, and W-phase windings 51U, 51V, and 51W. The switching pattern (h) shows a transition of an inverter current Iinv (see Fig. 1) flowing into the first inverter 20.

In the example shown in Fig. 9, the setting unit 84 sets, in a first predetermined period, a switching pattern in which a first zero voltage vector V01, a first L-level vector VaL, a first H-level vector VaH, an M-level vector VM, a second H-level vector VbH, a second L-level vector VbL, and a second zero voltage vector V02 appear sequentially. In Fig. 9, the first zero voltage vector V01 is '7/8', the first L-level vector VaL is '7/4', and the first H-level vector VaH is '1/4'. The M-level vector VM is '2/4'. The second H-level vector VbH is '2/5', the second L-level vector VbL is '2/7', and the second zero voltage vector V02 is '8/7'.

The setting unit 84 sets, as a switching pattern for a second predetermined period following the first predetermined period, a switching pattern that is line-symmetric to the switching pattern of the first predetermined period with respect to a reference line BL. The reference line BL is a line that bisects one switching period Tsw and separates the first predetermined period and the second predetermined period.

In Fig. 9(h), a dashed-dotted line indicates a time-average value of the inverter current Iinv in the predetermined period (hereinafter, an average current value Iave). During periods of the zero voltage vectors V01 and V02, the inverter current Iinv becomes 0, and a deviation from the average current value Iave increases. Here, the above-described switching pattern includes five active voltage vectors. Accordingly, periods of the zero voltage vectors during which the inverter current Iinv becomes 0 can be shortened. As a result, a current ripple flowing through the capacitor 15 can be reduced.

An arrangement order of the respective voltage vectors constituting the above-described switching pattern is set under a condition that, among the switches SUHa to SWLa and SUHb to SWLb included in the first and second inverters 20 and 30, only one switch has its switching state changed at a time. Accordingly, switching losses of the first and second inverters 20 and 30 can be reduced while shortening zero voltage vector periods.

The above switching pattern includes two active voltage vectors VaL and VaH on the same first axis line A1. This reduces a variation amount of an inverter current Iinv when the voltage vectors are switched as 'V01 → VaL → VaH'. The above switching pattern also includes two active voltage vectors VbH and VbL on the same second axis line A2. This reduces a variation amount of the inverter current Iinv when the voltage vectors are switched as 'VbH → VbL → V02'. As a result, a current ripple flowing through the capacitor 15 is reduced.

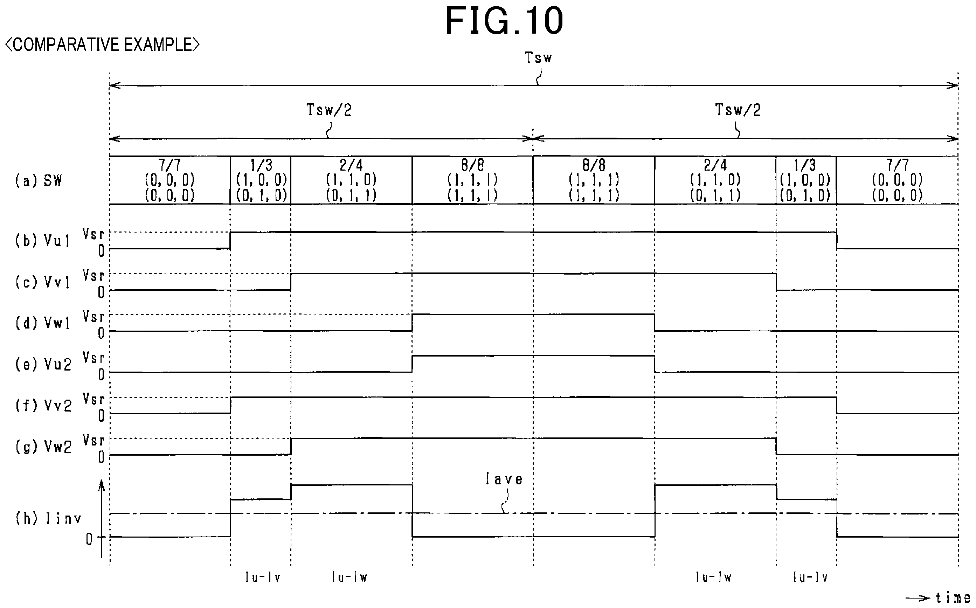

Fig. 10 shows a method for setting a switching pattern according to a comparative example. Fig. 10(a) to (h) correspond to Fig. 9(a) to (h).

In the comparative example, a switching pattern in a predetermined period includes only two active voltage vectors '1/3' and '2/4'. For this reason, a period of a zero voltage vector in the predetermined period becomes long, and a deviation between the inverter current Iinv and the average current value Iave becomes large during periods in which each voltage vector is selected. As a result, a current ripple flowing through the capacitor 15 increases.

Fig. 11 shows a flowchart of an H drive control process executed by the control apparatus 70. The process shown in Fig. 11 is repeatedly executed by the processor 71 of the control apparatus 70, for example, at a predetermined control period.

In step S10, a command value calculation unit 80 calculates d-axis and q-axis current command values Id* and Iq*.

In step S11, the current feedback unit 82 calculates d-axis voltage command value Vd* and q-axis voltage command values Vq* based on d-axis current command value Id* and q-axis current command values Iq* and d-axis current value Idr and q-axis current values Iqr.

In step S12, a fixed coordinate transformation unit 83 calculates α-axis and β-axis command voltages Vα and Vβ based on d-axis and q-axis voltage command values Vd* and Vq* and an electrical angle θr.

In step S13, the setting unit 84 calculates the command voltage vector Vαβ based on α-axis and β-axis command voltages Vα and Vβ. In step S14, the setting unit 84 identifies which one of first to sixth sectors S1 to S6 is a sector in which a tip of the command voltage vector Vαβ is located.

In step S15, a switching pattern in a predetermined period or in one switching period Tsw is set based on the identified sector, the command voltage vector Vαβ, and the electrical angle θr.

In step S16, the setting unit 84 generates drive signals for switches SUHa to SWLa and SUHb to SWLb of first and second inverters 20 and 30 based on the set switching pattern.

According to the present embodiment described above, when H drive control is executed, a current ripple flowing through the capacitor 15 can be reduced.

### <Other Embodiments>

The above-described embodiments may be modified as follows.

The method for setting the switching pattern is not limited to that illustrated in Fig. 9, and may be, for example, those described in (A) to (E) below.

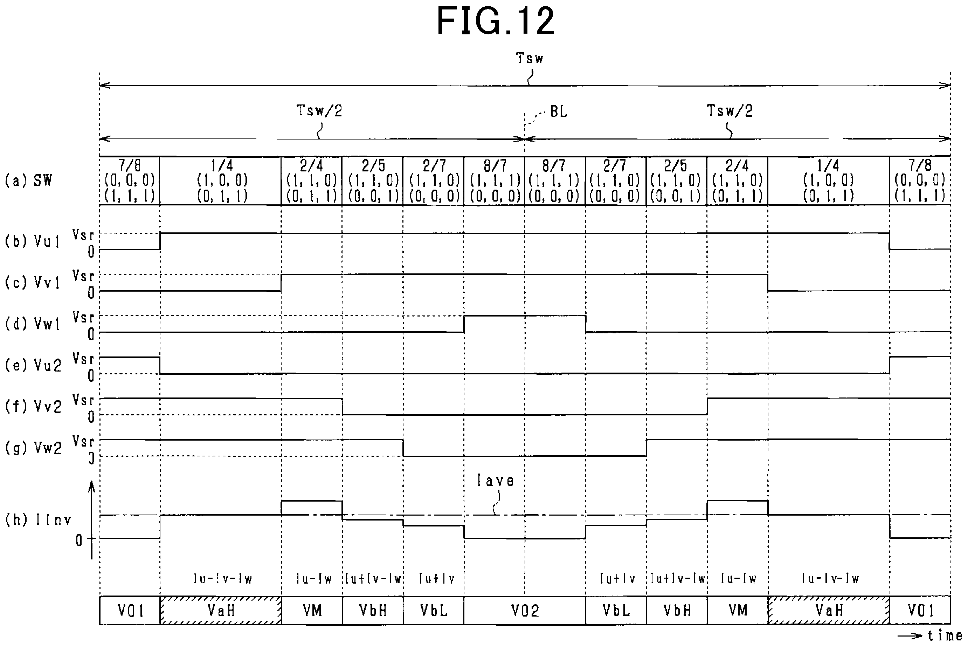

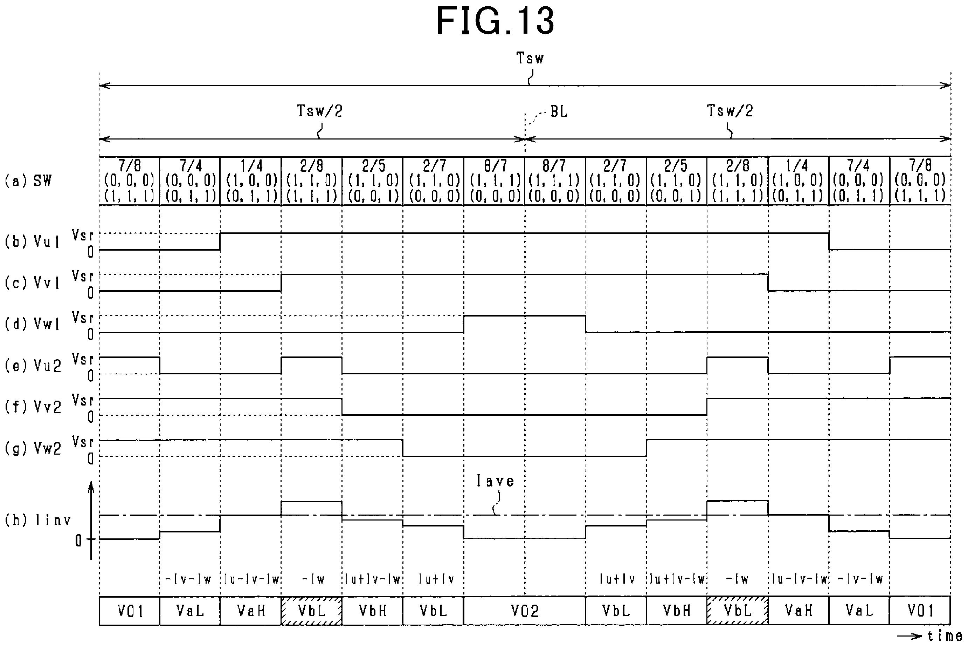

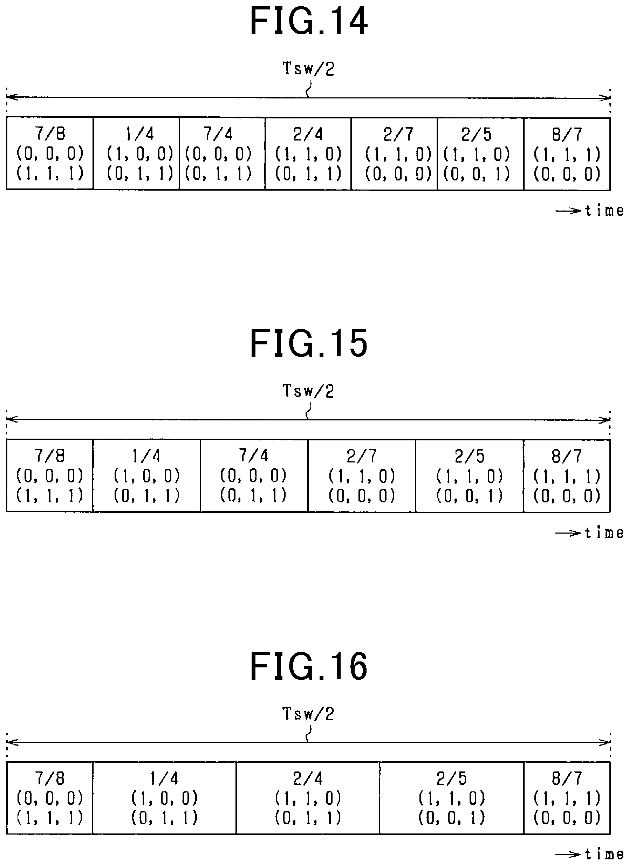

(A) The setting unit 84 may set a switching pattern excluding the first L vector VaL ('7/4') from the switching pattern shown in Fig. 9 (see Fig. 12). In this case, the active voltage vectors included in the switching pattern within a predetermined period are four vectors: the first H vector VaH, the M vector VM, the second H vector VbH, and the second L vector VbL. The setting unit 84 may set the switching pattern that does not use the first L vector VaL when it determines that a magnitude of the command voltage vector Vαβ is equal to or greater than a predetermined value, that is, a modulation factor is equal to or greater than a predetermined modulation factor.
(B) In the switching pattern shown in Fig. 12, the setting unit 84 may include the second L vector VbL ('2/8') in place of the M vector VM ('2/4') (see Fig. 13). In the example shown in Fig. 13, the number of switching state transitions of the U-phase in the second inverter 30 increases.
(C) In the switching pattern shown in Fig. 9, the setting unit 84 may reverse an order of the first L vector VaL and the first H vector VaH, as shown in Fig. 14.
(D) In the switching pattern shown in Fig. 14, the setting unit 84 may set a switching pattern excluding the M vector ('2/4') (see Fig. 15). The setting unit 84 may set the switching pattern shown in Fig. 15 when it determines that a magnitude of the command voltage vector Vαβ is less than a predetermined value, that is, a modulation factor is less than a predetermined modulation factor.
(E) In the switching pattern shown in Fig. 14, the setting unit 84 may set a switching pattern excluding the first L vector VaL ('7/4') and the second L vector ('2/7') (see Fig. 16). The setting unit 84 may set the switching pattern shown in Fig. 16 when it determines that a magnitude of the command voltage vector Vαβ is equal to or greater than a predetermined value.

The control system 100 may omit the changeover switch 13. In this case, the control system is maintained in an H drive state at all times.

The DC power supply is not limited to a battery and may be, for example, a fuel cell.

The rotary electrical machine is not limited to a permanent magnet synchronous machine and may be, for example, an induction machine.

The rotary electrical machine is not limited to a three-phase machine and may be a two-phase machine or a multi-phase machine having four or more phases.

The semiconductor switches constituting the first inverter and the second inverter are not limited to IGBTs and may be, for example, N-channel MOSFETs. In this case, a high-potential-side terminal of each switch is a drain, and a low-potential-side terminal is a source. Each switch includes a body diode.

An object to which the inverter, the rotating electrical machine, and the control apparatus is mounted, is not limited to a vehicle and may be, for example, a moving body such as an aircraft or a vessel. When the moving body is an aircraft, the rotating electrical machine serves as a propulsion power source for flight. When the moving body is a vessel, the rotating electrical machine serves as a propulsion power source for navigation. The mounting target of the inverter, the rotating electrical machine, and the control apparatus is not limited to a moving body.

The control unit and method thereof disclosed in the present disclosure may be accomplished by a dedicated computer constituted of a processor and a memory programmed to execute one or more functions embodied by computer programs. Alternatively, the control unit and method thereof disclosed in the present disclosure may be accomplished by a dedicated computer provided by a processor configured of one or more dedicated hardware logic circuits. Further, the control unit and method thereof disclosed in the present disclosure may be accomplished by one or more dedicated computer where a processor and a memory programmed to execute one or more functions, and a processor configured of one or more hardware logic circuits are combined. Furthermore, the computer programs may be stored, as instruction codes executed by the computer, into a computer readable non-transitory tangible recording media.

Hereinafter, characteristic configurations extracted from the above-described embodiments will be described.

### [Configuration 1]

A control apparatus (70) for a rotary electric machine, applied to a system including:
a rotary electric machine (40) having multi-phase armature windings (51U to 51W);
a first inverter (20) including, for each phase, a first upper-arm switch (SUHa to SWHa) and a first lower-arm switch (SULa to SWLa) connected in series, series connections of the first upper-arm switch and the first lower-arm switch being connected in parallel to a DC power supply (10);
a second inverter (30) including, for each phase, a second upper-arm switch (SUHb to SWHb) and a second lower-arm switch (SULb to SWLb) connected in series;
a positive-side bus line (11) electrically connecting, for each phase, a high-potential-side terminal of the first upper-arm switch and a high-potential-side terminal of the second upper-arm switch;
a negative-side bus line (12) electrically connecting, for each phase, a low-potential-side terminal of the first lower-arm switch and a low-potential-side terminal of the second lower-arm switch; and
a capacitor (15) connected in parallel to the series connection of the first upper-arm switch and the first lower-arm switch,
for each phase, a low-potential-side terminal of the first upper-arm switch and a high-potential-side terminal of the first lower-arm switch being electrically connected to a first end of the armature winding;
for each phase, a low-potential-side terminal of the second upper-arm switch and a high-potential-side terminal of the second lower-arm switch being electrically connected to a second end of the armature winding;
the control apparatus including:
   a setting unit (84) that sets, in H drive control for PWM-driving the first upper-arm switch, the first lower-arm switch, the second upper-arm switch, and the second lower-arm switch, a switching pattern for each predetermined period (Tsw/2) of the first upper-arm switch, the first lower-arm switch, the second upper-arm switch, and the second lower-arm switch; and
   a switch control unit (85) that controls on/off states of the first upper-arm switch, the first lower-arm switch, the second upper-arm switch, and the second lower-arm switch based on the switching pattern;
   space vectors in the H drive control including:
      a zero voltage vector;
      a first H vector (VaH) extending from an origin (O) on a first axis line (A1), the first H vector having an H-level voltage;
      a second H vector (VbH) extending from the origin on a second axis line (A2) forming an electrical angle of 60 degrees with respect to the first axis line, the second H vector having an H-level voltage;
      a first L vector (VaL) extending from the origin to a midpoint (P1) between a tip of the first H vector and the origin, the first L vector having an L-level voltage;
      a second L vector (VbL) extending from the origin to a midpoint (P2) between a tip of the second H vector and the origin, the second L vector having an L-level voltage; and
      an M vector (VM) extending from the origin to a midpoint (P3) between a tip of the first H vector and a tip of the second H vector, the M vector having an M-level voltage;
      the setting unit including, in the switching pattern for each predetermined period, at least three of the first H vector, the second H vector, the M vector, the first L vector, and the second L vector.

### [Configuration 2]

The control apparatus according to configuration 1,
the setting unit including, in the switching pattern for each predetermined period, at least four of the first H vector, the second H vector, the M vector, the first L vector, and the second L vector.

### [Configuration 3]

The control apparatus according to configuration 2,
the setting unit including, in the switching pattern for each predetermined period, the first H vector, the second H vector, the M vector, the first L vector, and the second L vector.

### [Configuration 4]

The control apparatus according to any one of configurations 1 to 3,
the setting unit setting an order of voltage vectors constituting the switching pattern for each predetermined period under a condition that only a switching state of one switch of one phase among the first upper-arm switch, the first lower-arm switch, the second upper-arm switch, and the second lower-arm switch is changed.

### [Configuration 5]

The control apparatus according to configuration 4,
the setting unit including, in the switching pattern for each predetermined period, the first H vector and the first L vector; and
setting an order of voltage vectors constituting the switching pattern for each predetermined period under a condition that the first L vector and the first H vector are adjacent in time.

### [Configuration 6]

The control apparatus according to configuration 4 or 5,
the setting unit including, in the switching pattern for each predetermined period, the second H vector and the second L vector; and
setting an order of voltage vectors constituting the switching pattern for each predetermined period under a condition that the second L vector and the second H vector are adjacent in time.

The present disclosure has been described in accordance with the embodiments. However, the present disclosure is not limited to the embodiments and structure thereof. The present disclosure includes various modification examples and modifications within the equivalent configurations. Further, various combinations and modes and other combinations and modes including one element or more or less elements of those various combinations are within the range and technical scope of the present disclosure.

## Claims

1. A control apparatus (70) for a rotary electric machine, applied to a system including:
a rotary electric machine (40) having multi-phase armature windings (51U to 51W);
a first inverter (20) including, for each phase, a first upper-arm switch (SUHa to SWHa) and a first lower-arm switch (SULa to SWLa) connected in series, series connections of the first upper-arm switch and the first lower-arm switch being connected in parallel to a DC power supply (10);
a second inverter (30) including, for each phase, a second upper-arm switch (SUHb to SWHb) and a second lower-arm switch (SULb to SWLb) connected in series;
a positive-side bus line (11) electrically connecting, for each phase, a high-potential-side terminal of the first upper-arm switch and a high-potential-side terminal of the second upper-arm switch;
a negative-side bus line (12) electrically connecting, for each phase, a low-potential-side terminal of the first lower-arm switch and a low-potential-side terminal of the second lower-arm switch; and
a capacitor (15) connected in parallel to the series connection of the first upper-arm switch and the first lower-arm switch,
wherein
for each phase, a low-potential-side terminal of the first upper-arm switch and a high-potential-side terminal of the first lower-arm switch are electrically connected to a first end of the armature winding;
for each phase, a low-potential-side terminal of the second upper-arm switch and a high-potential-side terminal of the second lower-arm switch are electrically connected to a second end of the armature winding;
the control apparatus comprising:
a setting unit (84) that sets, in H drive control for PWM-driving the first upper-arm switch, the first lower-arm switch, the second upper-arm switch, and the second lower-arm switch, a switching pattern for each predetermined period (Tsw/2) of the first upper-arm switch, the first lower-arm switch, the second upper-arm switch, and the second lower-arm switch; and
a switch control unit (85) that controls on/off states of the first upper-arm switch, the first lower-arm switch, the second upper-arm switch, and the second lower-arm switch based on the switching pattern set by the setting unit;
space vectors in the H drive control include:
a zero voltage vector;
a first H vector (VaH) extending from an origin (O) on a first axis line (A1), the first H vector having an H-level voltage;
a second H vector (VbH) extending from the origin on a second axis line (A2) forming an electrical angle of 60 degrees with respect to the first axis line, the second H vector having an H-level voltage;
a first L vector (VaL) extending from the origin to a midpoint (P1) between a tip of the first H vector and the origin, the first L vector having an L-level voltage;
a second L vector (VbL) extending from the origin to a midpoint (P2) between a tip of the second H vector and the origin, the second L vector having an L-level voltage; and
an M vector (VM) extending from the origin to a midpoint (P3) between a tip of the first H vector and a tip of the second H vector, the M vector having an M-level voltage; and
the setting unit includes, in the switching pattern for each predetermined period, at least three of the first H vector, the second H vector, the M vector, the first L vector, and the second L vector.

2. The control apparatus according to claim 1, wherein
the setting unit includes, in the switching pattern for each predetermined period, at least four of the first H vector, the second H vector, the M vector, the first L vector, and the second L vector.

3. The control apparatus according to claim 2, wherein
the setting unit includes, in the switching pattern for each predetermined period, the first H vector, the second H vector, the M vector, the first L vector, and the second L vector.

4. The control apparatus according to any one of claims 1 to 3, wherein
the setting unit sets an order of voltage vectors constituting the switching pattern for each predetermined period under a condition that only a switching state of one switch of one phase among the first upper-arm switch, the first lower-arm switch, the second upper-arm switch, and the second lower-arm switch is changed.

5. The control apparatus according to claim 4, wherein
the setting unit includes the first H vector and the first L vector in the switching pattern for each predetermined period; and
sets an order of voltage vectors constituting the switching pattern for each predetermined period under a condition that the first L vector and the first H vector are adjacent in time.

6. The control apparatus according to claim 4, wherein
the setting unit includes the second H vector and the second L vector in the switching pattern for each predetermined period; and
sets an order of voltage vectors constituting the switching pattern for each predetermined period under a condition that the second L vector and the second H vector are adjacent in time.

7. A program for a system including:
a rotary electric machine (40) having multi-phase armature windings (51U to 51W);
a first inverter (20) including, for each phase, a first upper-arm switch (SUHa to SWHa) and a first lower-arm switch (SULa to SWLa) connected in series, series connections of the first upper-arm switch and the first lower-arm switch being connected in parallel to a DC power supply (10);
a second inverter (30) including, for each phase, a second upper-arm switch (SUHb to SWHb) and a second lower-arm switch (SULb to SWLb) connected in series;
a positive-side bus line (11) electrically connecting, for each phase, a high-potential-side terminal of the first upper-arm switch and a high-potential-side terminal of the second upper-arm switch;
a negative-side bus line (12) electrically connecting, for each phase, a low-potential-side terminal of the first lower-arm switch and a low-potential-side terminal of the second lower-arm switch; and
a capacitor (15) connected in parallel to the series connection of the first upper-arm switch and the first lower-arm switch,
the program causing a processor (71) to execute:
for each phase, electrically connecting a low-potential-side terminal of the first upper-arm switch and a high-potential-side terminal of the first lower-arm switch to a first end of the armature winding;
for each phase, electrically connecting a low-potential-side terminal of the second upper-arm switch and a high-potential-side terminal of the second lower-arm switch to a second end of the armature winding;
setting, in H drive control for PWM-driving the first upper-arm switch, the first lower-arm switch, the second upper-arm switch, and the second lower-arm switch, a switching pattern for each predetermined period (Tsw/2) of the first upper-arm switch, the first lower-arm switch, the second upper-arm switch, and the second lower-arm switch; and
controlling on/off states of the first upper-arm switch, the first lower-arm switch, the second upper-arm switch, and the second lower-arm switch based on the switching pattern;
space vectors in the H drive control including:
a zero voltage vector;
a first H vector (VaH) extending from an origin (O) on a first axis line (A1), the first H vector having an H-level voltage;
a second H vector (VbH) extending from the origin on a second axis line (A2) forming an electrical angle of 60 degrees with respect to the first axis line, the second H vector having an H-level voltage;
a first L vector (VaL) extending from the origin to a midpoint (P1) between a tip of the first H vector and the origin, the first L vector having an L-level voltage;
a second L vector (VbL) extending from the origin to a midpoint (P2) between a tip of the second H vector and the origin, the second L vector having an L-level voltage; and
an M vector (VM) extending from the origin to a midpoint (P3) between a tip of the first H vector and a tip of the second H vector, the M vector having an M-level voltage;
the setting including, in the switching pattern for each predetermined period, at least three of the first H vector, the second H vector, the M vector, the first L vector, and the second L vector.

8. A method of controlling a rotary electric machine, applied to a system including:
a rotary electric machine (40) having multi-phase armature windings (51U to 51W);
a first inverter (20) including, for each phase, a first upper-arm switch (SUHa to SWHa) and a first lower-arm switch (SULa to SWLa) connected in series, series connections of the first upper-arm switch and the first lower-arm switch being connected in parallel to a DC power supply (10);
a second inverter (30) including, for each phase, a second upper-arm switch (SUHb to SWHb) and a second lower-arm switch (SULb to SWLb) connected in series;
a positive-side bus line (11) electrically connecting, for each phase, a high-potential-side terminal of the first upper-arm switch and a high-potential-side terminal of the second upper-arm switch;
a negative-side bus line (12) electrically connecting, for each phase, a low-potential-side terminal of the first lower-arm switch and a low-potential-side terminal of the second lower-arm switch; and
a capacitor (15) connected in parallel to the series connection of the first upper-arm switch and the first lower-arm switch,
the method comprising:
for each phase, electrically connecting a low-potential-side terminal of the first upper-arm switch and a high-potential-side terminal of the first lower-arm switch to a first end of the armature winding;
for each phase, electrically connecting a low-potential-side terminal of the second upper-arm switch and a high-potential-side terminal of the second lower-arm switch to a second end of the armature winding;
setting, in H drive control for PWM-driving the first upper-arm switch, the first lower-arm switch, the second upper-arm switch, and the second lower-arm switch, a switching pattern for each predetermined period (Tsw/2) of the first upper-arm switch, the first lower-arm switch, the second upper-arm switch, and the second lower-arm switch; and
controlling on/off states of the first upper-arm switch, the first lower-arm switch, the second upper-arm switch, and the second lower-arm switch based on the switching pattern;
space vectors in the H drive control including:
a zero voltage vector;
a first H vector (VaH) extending from an origin (O) on a first axis line (A1), the first H vector having an H-level voltage;
a second H vector (VbH) extending from the origin on a second axis line (A2) forming an electrical angle of 60 degrees with respect to the first axis line, the second H vector having an H-level voltage;
a first L vector (VaL) extending from the origin to a midpoint (P1) between a tip of the first H vector and the origin, the first L vector having an L-level voltage;
a second L vector (VbL) extending from the origin to a midpoint (P2) between a tip of the second H vector and the origin, the second L vector having an L-level voltage; and
an M vector (VM) extending from the origin to a midpoint (P3) between a tip of the first H vector and a tip of the second H vector, the M vector having an M-level voltage;
the setting including, in the switching pattern for each predetermined period, at least three of the first H vector, the second H vector, the M vector, the first L vector, and the second L vector.
